# EUROPÄISCHE PATENTSCHRIFT

(11) **EP 3 309 455 B1**
(45) Veröffentlichungstag und Bekanntmachung des Hinweises auf die Patenterteilung: **25.12.2019**
(21) Anmeldenummer: 17184467.3
(22) Anmeldetag: 02.08.2017
(51) Int. Cl.: F23K 5/04, F23K 5/18, F16K 11/07

(54) **ENTLÜFTUNGSANORDNUNG FÜR EIN MIT FLÜSSIGEM BRENNSTOFF IM EINSTRANG-BETRIEB ARBEITENDES HEIZGERÄT**
VENTILATION SYSTEM FOR A HEATING DEVICE OPERATING WITH LIQUID FUEL IN A SINGLE LINE SYSTEM
DISPOSITIF DE VENTILATION POUR UN APPAREIL DE CHAUFFAGE À COMBUSTIBLE LIQUIDE FONCTIONNANT DANS UNE EXPLOITATION MONOBRIN

(30) Priorität: 14.10.2016 DE 102016119684
(43) Veröffentlichungstag der Anmeldung: 18.04.2018
(73) Patentinhaber: Valeo Thermal Commercial Vehicles Germany GmbH, 82205 Gilching (DE)
(72) Erfinder: Koch, Stefan, 17034 Neubrandenburg (DE); Soppa, Nico, 17033 Neubrandenburg (DE); Wardenga, Hans-Michael, 17039 Neddemin (DE)
(74) Vertreter: Strasser, Wolfgang

(56) Entgegenhaltungen:
- DD-A- 83 625
- DE-A1-102004 050 121
- DE-U1- 9 016 790

## Beschreibung

Die Erfindung betrifft eine Entlüftungseinrichtung für ein mit flüssigem Brennstoff im Einstrang-Betrieb arbeitendes Heizgerät der im Oberbegriff von Anspruch 1 genannten Art sowie ein mit einer solchen Entlüftungseinrichtung ausgestattetes Heizgerät.

Die hier beschriebenen Heizgeräte kommen sowohl als stationäre Geräte zum Heizen von Gebäuden als auch in Fahrzeugen, insbesondere in Personenkraftwagen, Omnibussen, Nutzfahrzeugen, Lastkraftwagen, Schienenfahrzeugen und dergleichen zur Verwendung. In den zuletzt genannten Einsatzfällen dienen sie insbesondere zum Heizen der Innenräume dieser Fahrzeuge und/oder zum Vorheizen der Motor-Kühlflüssigkeit, z.B. von Dieselmotoren. Diese Heizgeräte umfassen eine von einem Motor angetriebene Brennstoffpumpe, die mit Hilfe einer Vorlaufleitung den flüssigen Brennstoff aus einem Vorratsbehälter bzw. Tank ansaugt und einem Druck-Leitungsbereich zuführt, in welchem ein durch einen Druckbegrenzer oder Druckregler definierter erhöhter Druck herrscht. Aus diesem Bereich strömt der Brennstoff zu einer Zerstäuberdüse, vermittels derer er zur Bildung einer Brennerflamme in einen Brennerraum eingespritzt wird.

Im Allgemeinen ist eine Absperrvorrichtung vorgesehen, die z.B. als Magnet-Absperrventil ausgebildet sein und geschlossen werden kann, um die Brennstoffzufuhr zur Zerstäuberdüse zu unterbrechen.

Eine Besonderheit der hier in Rede stehenden Einstrang-Systeme besteht darin, dass durch die Brennstoffpumpe ein größeres Volumen an Brennstoff gefördert und dem Druckbereich zugeführt wird, als für die Verbrennung erforderlich ist. Der nicht benötigte Brennstoff gelangt über den Druckbegrenzer in eine Rückführleitung und von dieser in eine Bypassleitung, die ihrerseits mit der Vorlaufleitung verbunden ist, über welche die Pumpe den Brennstoff aus dem Brennstofftank ansaugt.

Sowohl bei der Erst-Inbetriebnahme eines derartigen Einstrang-Systems als auch nach Instandsetzungs- und Wartungsarbeiten am Brenner oder nach dem Leerfahren des Tanks ist es erforderlich, den hinter dem Tank liegenden Teil des Systems zu entlüften.

Dies kann gemäß dem Stand der Technik auf verschiedene Arten erfolgen.

Beispielsweise ist es möglich, nach einem Pumpen-Vorlauf, der zunächst in der Weise erfolgt, dass die der Zerstäuberdüse vorgeschaltete Absperrvorrichtung geschlossen ist, um im Druck-Leitungsbereich den erforderlichen Druck zu erzeugen, nach einer gewissen Zeitspanne die Absperrvorrichtung zu öffnen und somit den Druck-Leitungsbereich über die Zerstäuberdüse zu entlüften. Ist auf diese Weise der Großteil der Luft entwichen, kommt mit Blasen durchsetzter Brennstoff an der Zerstäuberdüse an. Die dann einsetzende Verbrennung ist sehr ungleichmäßig, weil der Brennstoff noch nicht in ausreichender Menge und mit stark schwankendem Druck zur Verfügung steht. Dabei können große Mengen unverbrannter Kohlenwasserstoffe und Ruß freigesetzt werden.

Diese Prozedur ist somit nicht nur sehr zeitaufwendig, sondern auch unter Umweltgesichtspunkten problematisch.

Um den Zeitraum, in welchem eine unvollständige Verbrennung stattfindet, möglichst kurz zu halten, wird die Absperrvorrichtung schnell wieder geschlossen, die Brennstoffpumpe aber für eine Nachlaufzeit weiterhin betrieben.

Während der Vor- und Nachlaufzeit kann bei geschlossener Absperrvorrichtung keine Entlüftung stattfinden und im System eingeschlossene Luft wird über die Rückführ- und die Bypass-Leitung im System umgepumpt.

Die eben beschriebene Vorgehensweise kann mit einer anderen vorausgehenden Entlüftungsart kombiniert werden, die auch für sich alleine durchführbar ist und bei der eine Entlüftungsschraube an der Brennstoffpumpe oder einer anderen Stelle des Druck-Leitungsbereiches geöffnet wird. Bekannte Entlüftungsschrauben werden beispielsweise durch Einschrauben in ein Innengewinde mit einer Dichtfläche gegen einen (zum Beispiel konischen) Dichtsitz gedrückt, sodass sie den Druck-Leitungsbereich dicht verschließen. Die Entlüftung erfolgt dann dadurch, dass die Entlüftungsschraube gelöst wird, wobei sich am Dichtsitz ein Spalt öffnet, durch den das im Druck-Leitungsbereich befindliche, unter Druck stehende Medium über eine in der Entlüftungsschraube vorgesehene Bohrung austreten kann. Ist das austretende Medium blasenfrei, wird die Entlüftungsschraube wieder angezogen und das so entlüftete System wieder abgedichtet.

Beiden Arten von Entlüftung ist gemeinsam, dass es zu einem Austritt von Brennstoff in die Heizgeräte-Umgebung kommt. Da die Saugleistung der Pumpe groß ist, besteht beim Öffnen der in Strömungsrichtung hinter der Pumpe angeordneten Entlüftungsschraube die Gefahr, dass in erster Linie nicht überschüssige Luft aus dem System entweicht, sondern auf dem Weg des geringsten Widerstandes zusätzliche Luft in den Bypass und somit wieder in die Vorlaufleitung der Pumpe hineingezogen wird. Um dies zu verhindern, wird der Bypass üblicherweise durch geeignete Komponenten, wie zum Beispiel Rückschlagventile oder weitere Verschlussschrauben verschlossen. Diese zusätzlichen Komponenten sind jedoch kostenintensiv.

Auch werden in manchen Werkstätten besondere Apparaturen eingesetzt, die dazu dienen, das System durch von außen her angelegten Unterdruck zu entlüften. Dies bedingt ebenfalls einen erhöhten apparativen Aufwand, der zu zusätzlichen Kosten führt.

Die Druckschrift DD 83 625 A zeigt eine Entlüftungseinrichtung mit allen im Oberbegriff von Anspruch 1 zusammengefassten Merkmalen.

Das zwischen einer Betriebsstellung und einer Entlüftungsstellung in axialer Richtung hin und her bewegbare Betätigungselement wird dort von einem Verschlussstopfen gebildet, der in eine als "Stutzen" bezeichnete Öffnung unterschiedlich tief eingeschraubt werden kann. Der Stutzen steht mit einer Rücklaufleitung, einer Bypassleitung und der Pumpen-Außenseite in Verbindung.

Der Verschlussstopfen weist eine sich zunächst über einen Teil seiner axialen Länge erstreckende Bohrung auf, die im montierten Zustand mit der Rücklaufleitung in strömungsmäßiger Verbindung steht und an ihrem im Inneren des Verschlussstopfens liegenden Ende in eine radial verlaufende Bohrung übergeht, die in der das Einschraubgewinde aufweisenden zylindrischen Mantelfläche des Verschlussstopfens nach außen mündet. Diese miteinander verbundenen Bohrungen bilden gemeinsam einen Entlüftungskanal.

Der Verschlussstopfen kann vollständig, d.h. so weit in den Stutzen eingeschraubt werden, dass die Mündung der radialen Bohrung durch die Innenwand des Stutzens verschlossen ist, sodass die Rücklaufleitung in diesem Bereich keine Verbindung zur Außenseite aufweist (Betriebsstellung); alternativ hierzu ist auch ein weniger tiefes Einschrauben des Verschlussstopfens in den Stutzen derart möglich, dass die Mündung des radialen Teils des Entlüftungskanals zur Außenseite des Pumpengehäuses hin offen ist (Entlüftungsstellung).

Die in der Betriebsstellung für einen Einstrang-Betrieb erforderliche Bypass-Verbindung der Rückführleitung mit dem Saugkanal der Pumpe, wird bei der bekannten Anordnung mithilfe eines Verbindungskanals hergestellt, in dem eine Absperrvorrichtung angeordnet ist, die von einem federbelasteten Rückschlagventil gebildet wird und deren Ausgangsseite in den Saugkanal mündet. Die Kraft der Feder des Rückschlagventils muss so gewählt sein, dass dieser Strömungsweg in der Betriebsstellung geöffnet und in der Entlüftungsstellung geschlossen ist.

Das Dokument DE 10 2004 505 121 A1 beschreibt eine Heizvorrichtung für flüssigen Brennstoff, bei der in der von einer Brennstoffpumpe zum Brennerkopf führenden Leitung ein 3/2-Wege-Ventil angeordnet ist, das elektrisch so gesteuert werden kann, dass es in einer ersten Stellung, in der es die Brennstoffzuleitung mit einer zum Vorratstank zurück führenden Brennstoffrückleitung verbindet, zusätzlich die Verbindung der Brennstoffzuleitung zum Brennerkopf trennt, und in einer zweiten Stellung, in die es die Brennstoffzuleitung von der Brennstoffrückleitung trennt, zusätzlich die Verbindung der Brennstoffzuleitung zum Brennerkopf herstellt.

Auf diese Weise kann ein Kurzschlusskreislauf, der vom Vorratstank über die Brennstoffzuleitung und die Brennstoffrückleitung zurück in den Vorratstank führt, gebildet werden, von dem die am Brennerkopf anstehende Brennstoffsäule unabhängig ist.

Die Problematik der Entlüftung des Druckseiten-Bereichs der Pumpe wird nicht erwähnt und es bleibt offen, ob das genannte 3/2-Wege-Ventil hierfür geeignet ist.

Auch diese bekannte Vorrichtung benötigt aufwendige Bauteile, zu denen nicht nur das 3/2-Wege-Ventil sondern auch die für seine Betätigung erforderliche elektrisch/elektronische Ansteuereinrichtung gehört.

Demgegenüber liegt der Erfindung die Aufgabe zugrunde, eine Entlüftungseinrichtung der eingangs genannten Art zu schaffen, die es ohne die Verwendung von zusätzlichen, kostenaufwendigen Komponenten ermöglicht, den Druck-Leitungsbereich eines Einstrang-Systems auf umweltfreundliche und einfache Art zu entlüften.

Zur Lösung dieser Aufgabe sieht die Erfindung die im Anspruch 1 zusammengefassten Merkmale vor.

Durch die erfindungsgemäßen Maßnahmen wird erreicht, dass das Betätigungselement der Entlüftungseinrichtung bei seiner Bewegung aus der Betriebsstellung in die Entlüftungsstellung zunächst die Bypassleitung, die zur Saugseite der Brennstoffpumpe führt, sicher von der Rückführleitung abtrennt und erst danach eine Verbindung zwischen der Rückführleitung und der zur Außenseite führenden Entlüftungsleitung herstellt, so dass ein ungewollter Eintritt von Luft während der Entlüftungsprozedur praktisch vollständig verhindert wird.

Ein besonderer Vorteil der erfindungsgemäßen Einrichtung ist darin zu sehen, dass weder ein Rückschlagventil noch andere kostenintensive Komponenten erforderlich sind, um die Bypassleitung während des Entlüftungsvorganges gegen einen unbeabsichtigten Lufteintritt abzusichern. Vielmehr ist sichergestellt, dass die Entlüftung erst beginnt, wenn der Bypass komplett geschlossen ist, sodass beim Entlüften keine Luft eingesaugt werden kann.

Erfindungsgemäß ist es bevorzugt, einen Leitungsverbindungskörper vorzusehen, in dem der Durchgangskanal ausgebildet ist und in den die Rückführleitung, die Bypassleitung und die nach außen führende Entlüftungsleitung münden.

Vorzugsweise besitzt die Entlüftungsschraube zwei Längsbohrungen, von denen die eine von ihrem im eingeschraubten Zustand axial innen liegenden Ende und die andere von dem axial gegenüberliegenden äußeren Ende der Entlüftungsschraube ausgeht. Die beiden in axialer Richtung verlaufenden Längsbohrungen sind nicht unmittelbar miteinander verbunden, sondern enden jeweils in einer oder mehreren zugehörigen, radial verlaufenden Querbohrungen, die durch Mantelflächen der Entlüftungsschraube in den die Entlüftungsschraube umgebenden Raumbereich münden. Die im zusammengebauten Zustand axial innen liegende Längsbohrung steht in Strömungsverbindung mit der Rückführleitung, während die axial außen liegende Längsbohrung mit einer nach außen führenden Entlüftungsleitung in Verbindung steht.

Sowohl die Entlüftungsschraube als auch der Durchgangskanal besitzen axial hintereinander angeordnete Abschnitte mit unterschiedlichen Durchmessern, die so aufeinander abgestimmt sind, dass dann, wenn die Entlüftungsschraube in der Betriebsstellung vollständig in den Durchgangskanal eingeschraubt ist, die axial innen liegende Längsbohrung und die zugehörige Querbohrung eine Strömungsverbindung zwischen der Rückführleitung und der Bypassleitung bilden. Andererseits wird in dieser Stellung eine Dichtfläche, die im Bereich zwischen zwei axial aufeinanderfolgenden, einen unterschiedlichen Durchmesser aufweisenden zylindrischen Abschnitten der Entlüftungsschraube ausgebildet ist, so gegen einen entsprechenden, an der Innenwand des Durchgangskanals des Leitungsverbindungskörpers vorgesehenen Dichtsitz gepresst, dass eine Dichtung erzielt wird, die einen Übertritt des aus der Rückführleitung kommenden Mediums (im Idealfall blasenfreier Brennstoff) in die zur Entlüftungsleitung führende Querbohrung und die zugehörige Längsbohrung der Entlüftungsschraube verhindert.

Bei der eben erwähnten Dichtung kann es sich entweder um eine Passdichtung zwischen einer an der Entlüftungsschraube ausgebildeten, sich von außen nach innen konisch verjüngenden oder kugelig-konvexen Dichtfläche und einem konischen Dichtsitz des Leitungsverbindungskörpers oder eine andere Dichtungsart handeln, die beispielsweise durch plastische oder elastische Verformung eines aus einem weichen Metall oder aus einem elastomeren Material bestehenden Dichtkörpers (zum Beispiel O-Rings) erzielt wird.

Wird die Entlüftungsschraube entgegen der Einschraubrichtung um einige Umdrehungen gedreht und dadurch im Durchgangskanal in axialer Richtung etwas nach außen bewegt, so gelangt sie in eine Entlüftungsstellung, in der die Verbindung zwischen dem Durchgangskanal und der Bypassleitung dicht verschlossen ist, während der Verschluss zwischen der Dichtfläche an der Entlüftungsschraube und dem Dichtsitz an der Innenseite des Durchgangskanals aufgehoben ist, wodurch eine Strömungsverbindung zwischen der Rückführleitung und der nach außen führenden Längsbohrung der Entlüftungsschraube hergestellt wird, sodass der Druck-Leitungsbereich des Systems entlüftet wird. Wesentlich ist dabei, dass bei der durch das Herausschrauben bewirkten Axialbewegung der Entlüftungsschraube zuerst die Rücklaufleitung und die Bypassleitung vollständig voneinander getrennt werden, bevor die Verbindung der Rücklaufleitung mit der Außenseite hergestellt wird.

Dadurch, dass die Entlüftungsschraube durch Drehen um ihre Längsachse aus der Betriebsstellung in die Entlüftungsstellung und umgekehrt bewegt werden kann, gestaltet sich der Entlüftungsvorgang sehr einfach, weil die für den jeweiligen Übergang zwischen diesen beiden Stellungen erforderliche Axialverschiebung durch Abzählen der durchgeführten Umdrehungen exakt kontrolliert werden kann.

Wie bereits erwähnt, kann die Abdichtung zwischen den verschiedenen Leitungen auch mithilfe von Elastomer-Dichtungen erfolgen, doch ist ein Passsitz bevorzugt, weil dieser gegen den Brennstoff eine höhere Resistenz aufweist und nicht zu einem Verharzen neigt.

Diese und weitere vorteilhafte Ausgestaltungen der erfindungsgemäßen Entlüftungseinrichtung sind in den Unteransprüchen niedergelegt.

Die Erfindung wird im Folgenden anhand von Ausführungsbeispielen unter Bezugnahme auf die Zeichnung beschrieben; in dieser zeigen:
- Fig. 1: eine schematische Darstellung des hydraulischen Schaltbildes eines mit einer erfindungsgemäßen Entlüftungseinrichtung versehenen Heizgerätes im regulären Einstrang-Betriebszustand,
- Fig. 2: eine entsprechende Darstellung des hydraulischen Schaltbildes aus Fig. 1 während des Entlüftens,
- Fig. 3: eine teilweise geschnittene Seitenansicht der bevorzugten Ausführungsform einer Entlüftungsschraube, die in der erfindungsgemäßen Entlüftungseinrichtung zum Einsatz kommt,
- Fig. 4: eine perspektivische, teilweise geschnittene Ansicht der Entlüftungsschraube aus Fig. 3,
- Fig. 5: eine vergrößerte Schnittansicht der bevorzugten Ausführungsform einer erfindungsgemäßen Entlüftungseinrichtung im regulären Einstrang-Betriebszustand,
- Fig. 6: eine der Fig. 5 entsprechende Schnittansicht der erfindungsgemäßen Entlüftungseinrichtung während des Entlüftens,
- Fig. 7: eine perspektivische Ansicht einer Zwischenebene eines mit einer erfindungsgemäßen Entlüftungseinrichtung ausgestatteten Heizgerätes und
- Fig. 8: eine Schnittansicht durch die Entlüftungseinrichtung aus Fig. 7 im regulären Einstrang-Betriebszustand.

In den Figuren sind gleiche Teile und Komponenten mit den gleichen Bezugszeichen bezeichnet. Wenn bei der Erläuterung der Figuren Positionsangaben wie "oben", "hinten", "links", "rechts" usw. verwendet werden, so bezieht sich dies lediglich auf die Lage der betreffenden Teile in den Zeichnungsfiguren und ist keinesfalls einschränkend oder kennzeichnend für die tatsächliche Einbaulage an oder in einer erfindungsgemäßen Entlüftungseinrichtung bzw. einem mit einer solchen Entlüftungseinrichtung ausgestatteten Heizgerät zu verstehen.

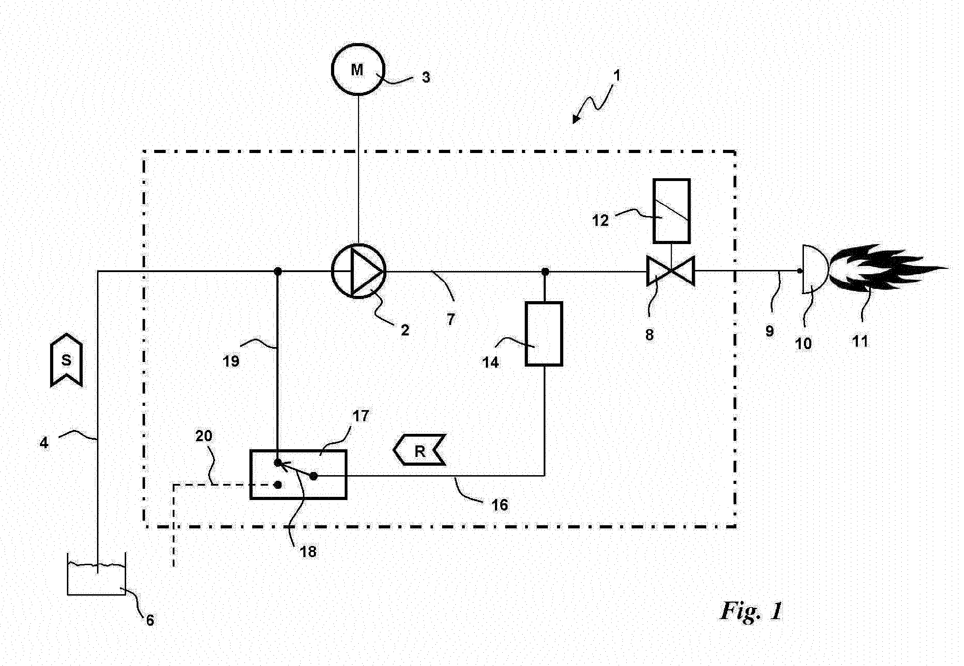

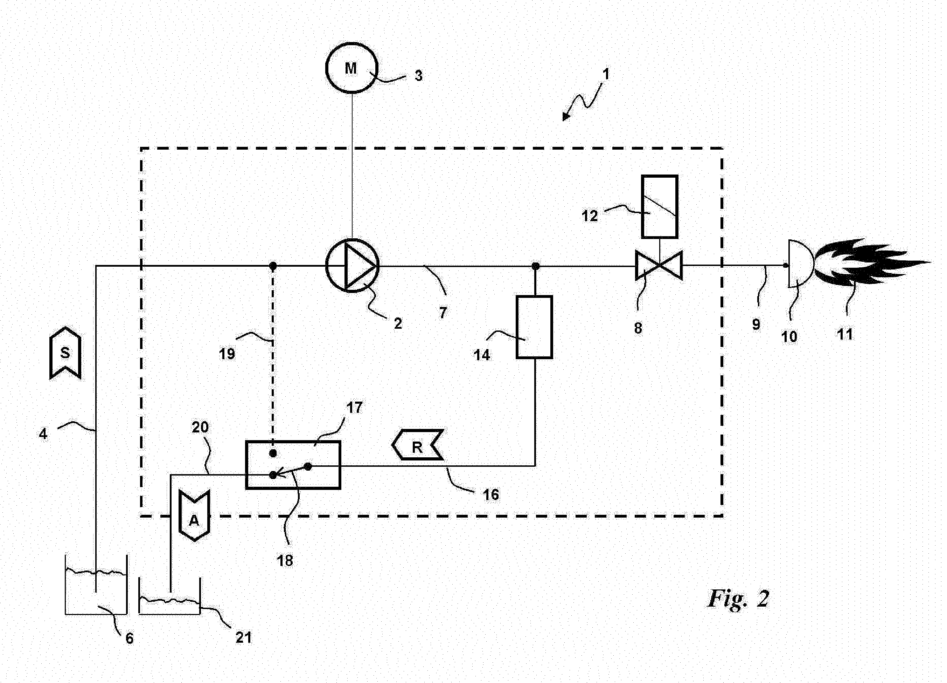

In den beiden Fig. 1 und 2 ist jeweils eine Brennstoffpumpe 1 dargestellt, deren Verdränger 2 durch einen Motor 3 angetrieben wird, und bei der es sich zwar vorzugsweise um eine Zahnradpumpe handelt, die alternativ aber auch ein beliebiger anderer Pumpentyp sein kann. Der Motor 3 kann entweder in der dargestellten Weise ein Elektromotor sein, der eine selbständige Einheit bildet oder in die Brennstoffpumpe 1 integriert ist. Statt eines Elektromotors kann auch eine andere geeignete Motorart verwendet werden.

Die Brennstoffpumpe 1 saugt über eine Ansaug- bzw. Vorlaufleitung 4 Brennstoff aus einem Brennstofftank 6 an, wie dies durch den Pfeil S zum Ausdruck gebracht ist.

Auf der Druckseite des Verdrängers 2 der Brennstoffpumpe 1 führt zunächst eine Leitung 7 zu einem Absperrventil 8, an das sich eine weitere Leitung 9 anschließt, die den Brennstoff einer Zerstäuberdüse 10 zuführt, durch die hindurch er in einen (nicht weiter dargestellten) Brennraum eingespritzt wird, um dort in einer Flamme 11 verbrannt zu werden.

Das Absperrventil 8 ist über einen Elektromagneten 12 betätigbar und wird dann, wenn kein Heizbetrieb läuft, geschlossen, um ein Austreten von Brennstoff in den Brennraum zu verhindern.

Der in den Leitungen 7 und 9 herrschende Druck, der bei Pumpen der Anmelderin typischer Weise in einem Bereich von 9 bis 10 bar liegen kann, wird durch einen einstellbaren Druckbegrenzer 14 definiert, der, wie dies durch den Pfeil R angedeutet ist, den von der Brennstoffpumpe 1 zu viel geförderten Brennstoff über eine Rückführleitung 16 dem Eingangsanschluss eines Leitungsverbindungskörpers 17 zuführt, der zwei Ausgangsanschlüsse aufweist, von denen der eine mit einer Bypassleitung 19 und der andere mit einer Entlüftungsleitung 20 verbunden ist.

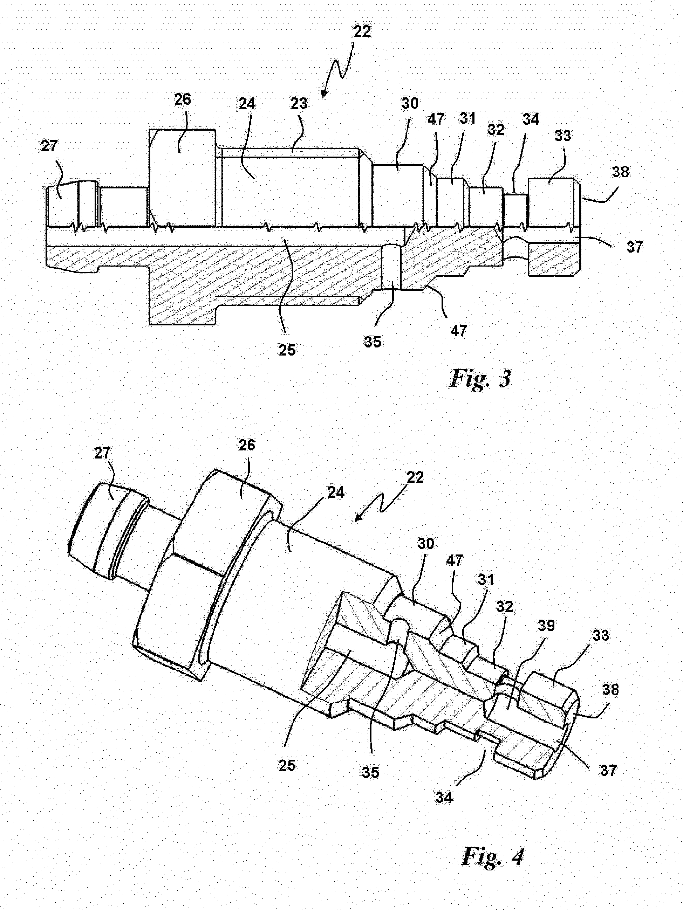

Der Leitungsverbindungskörper 17 umfasst eine Entlüftungseinrichtung 18, die in den Fig. 1 und 2 symbolisch als Umschalter dargestellt ist und deren tatsächlicher Aufbau insbesondere unter Bezugnahme auf die Fig. 3 bis 6 noch genauer erläutert wird.

Bei dem in Fig. 1 dargestellten Normalbetrieb eines Einstrang-Systems führt die Entlüftungseinrichtung 18 den vom Druckbegrenzer 14 kommenden, überschüssigen Brennstoff über die Bypassleitung 19 in die Vorlaufleitung 4 zurück, während die nach außen hin offene Entlüftungsleitung 20 von einer Brennstoffzufuhr abgetrennt und daher leer ist, wie dies durch eine gestrichelte Darstellung angedeutet wird.

In Fig. 2 ist der Entlüftungsbetrieb dargestellt, bei dem die Entlüftungseinrichtung 18 eine Verbindung zwischen dem mit der Rückführleitung 16 verbundenen Anschluss des Leitungsverbindungskörpers 17 und dessen mit der Entlüftungsleitung 20 verbundenen Anschluss herstellt, sodass im Druck-Leitungsbereich, d.h. auf der Druckseite der Pumpe 2 vorhandener Treibstoff mit eventuell eingeschlossenen Gasblasen über die Entlüftungsleitung 20 in einen Auffangbehälter 21 abgelassen werden kann. In diesem Betriebszustand ist die Rückführleitung 16 vollständig von der Bypassleitung 19 getrennt und führt dieser keinen Brennstoff zu. Dies ist durch eine gestrichelte Wiedergabe der Bypassleitung 19 angedeutet.

In den Fig. 1 und 2 sind das Absperrventil 8, der zu seiner Betätigung dienende Elektromagnet 12, der Druckbegrenzer 14, der Leitungsverbindungskörper 17, die Bypassleitung 19 und die Entlüftungsleitung 20 in die durch eine strichpunktierte Linie angedeutete Brennstoffpumpe 1 integriert, bzw. unmittelbar mit dem Pumpenkörper zusammengebaut.

Diese Anordnung ist jedoch nicht zwingend; so können einzelne, alle oder beliebige Kombinationen der Einheiten bzw. Komponenten 8, 12, 14, 17, 19, 20 vom Pumpenkörper getrennt positioniert sein. Erfindungsgemäß können auch beliebige andere Variationen und Kombinationen der eben genannten Anordnungsmöglichkeiten vorgesehen sein.

In den Fig. 3 und 4 ist eine bevorzugte Ausführungsform einer erfindungsgemäßen Entlüftungseinrichtung 18 dargestellt, die hier in Form einer Entlüftungsschraube 22 realisiert ist.

Die Entlüftungsschraube 22 umfasst einen mit einem Außengewinde 23 (in Fig. 4 nicht dargestellt) versehenen zylindrischen Hauptabschnitt 24, der von einer zentralen, axial verlaufenden Innen-Längsbohrung 25 durchzogen ist.

An seiner in den Fig. 3 und 4 linken Seite ist der Hauptabschnitt 24 mit einem 6-Kant 26 versehen, an den sich nach links hin eine Schlauchtülle 27 anschließt. Der Hauptabschnitt 24, der 6-Kant 26 und die Schlauchtülle 27 sind zur Längsachse der Entlüftungsschraube 22 konzentrisch ausgebildet und einstückig miteinander verbunden.

Auf die Schlauchtülle 27 kann zumindest während des Entlüftungsvorganges ein vorzugsweise durchsichtiger Brennstoffschlauch (nicht gesondert dargestellt) aufgeschoben werden, der dann die Entlüftungsleitung 20 (siehe Fig. 1 und 2) bildet und zu einem Auffangbehälter 21 (siehe Fig. 2) führen kann. Die Durchsichtigkeit des Brennstoffschlauches ermöglicht es, dass Austreten von Luftblasen zu beobachten.

An den mit dem Außengewinde 23 versehenen Hauptabschnitt 24 schließen sich in axialer Richtung nach rechts vier weitere mit dem Hauptabschnitt 24 einstückig ausgebildete Zylinderabschnitte 30, 31, 32 und 33 an, von denen die ersten drei einen geringeren Außendurchmesser aufweisen, als der jeweils links von ihnen liegende Zylinderabschnitt. Der das rechte Ende der Entlüftungsschraube 22 bildende Zylinderabschnitt 33 besitzt den gleichen Außendurchmesser wie der zweite Zylinderabschnitt 31 und ist von dem dritten Zylinderabschnitt 32 durch eine sich über den ganzen Umfang der Entlüftungsschraube 22 erstreckende Nut 34 getrennt. Der dritte Zylinderabschnitt 32 und die Nut 34 können den gleichen Durchmesser aufweisen.

Die Innen-Längsbohrung 25 erstreckt sich lediglich durch die Schlauchtülle 27, den 6-Kant 26 und den zylindrischen Hauptabschnitt 24 bis in den ersten, bezüglich des Hauptabschnittes 24 einen verkleinerten Durchmesser aufweisenden Zylinderabschnitt 30 hinein, an dessen von der Schlauchtülle 27 entfernt liegenden axialen Ende sie in eine einseitig radial verlaufende, sich bis zur zylindrischen Außenfläche des Zylinderabschnittes 30 und durch diese hindurch nach außen erstreckende Querbohrung 35 mündet. Diese Querbohrung 35 kann sich auch ausgehend von der Innen-Längsbohrung 25 zu beiden Seiten hin radial nach außen erstrecken. In diesem Fall durchsetzt sie den ersten Zylinderabschnitt 30 vollständig und mündet auf diametral gegenüberliegenden Seiten seiner zylindrischen Außenfläche nach außen. Alternativ hierzu können auch mehrere radial verlaufende, zumindest einseitig nach außen durchgehende und mit der Innen-Längsbohrung 25 in Verbindung stehende Querbohrungen vorgesehen sein.

Die beiden sich in Fig. 3 an den Zylinderabschnitt 30 nach rechts hin anschließenden Zylinderabschnitte 31, 32 der Entlüftungsschraube 22 weisen keine Innenbohrung auf und sind aufgrund ihrer geringeren Außendurchmesser sowohl gegenüber dem Zylinderabschnitt 30 als auch gegeneinander abgesetzt.

Der den in den Fig. 3 und 4 rechten Endbereich der Entlüftungsschraube 22 bildende Zylinderabschnitt 33 weist ebenfalls eine sich in Längsrichtung in axialer Richtung durch ihn hindurch erstreckende, zentrale Innenbohrung 37 auf, die am Stirnende 38 der Entlüftungsschraube 22 nach außen mündet und an ihrem axial inneren Ende über eine oder mehrere Querbohrungen 39 mit der nach außen offenen Nut 34 in Verbindung steht.

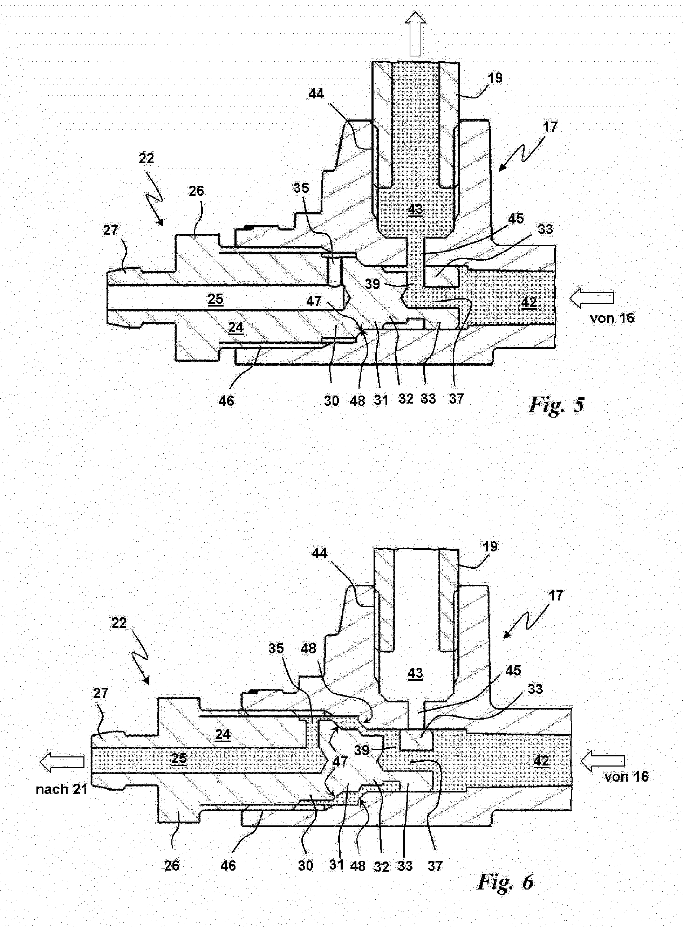

Die Fig. 5 und 6 zeigen die Entlüftungsschraube 22 im Zusammenwirken mit einem Leitungsverbindungskörper 17, der jede geeignete Außenform aufweisen kann und einen sich vollständig durch ihn hindurch erstreckenden, in den Fig. 5 und 6 horizontal verlaufenden Durchgangskanal 42 und eine in diese von oben her senkrecht einmündende Anschlussbohrung 43 aufweist, in deren Innengewinde 44 bei dem gezeigten Beispiel eine Bypassleitung 19 von oben her eingeschraubt ist. Diese Anschlussbohrung 43 steht über eine Verbindungsbohrung 45 mit kleinerem Durchmesser mit dem Durchgangskanal 42 in Verbindung.

In den Durchgangskanal 42 mündet von rechts her die hier nicht wiedergegebene Rückführleitung 16. Auf der gegenüberliegenden Seite besitzt der Durchgangskanal 42 einen Durchmesser, der so groß ist, dass in ein dort ausgebildetes Innengewinde 46 die Entlüftungsschraube 22 mit dem auf ihrem zylindrischen Hauptabschnitt 24 vorgesehenen Außengewinde 23 von links her maximal so weit eingeschraubt werden kann, dass der sich an den Hauptabschnitt 24 anschließende, einen geringeren Durchmesser als der Hauptabschnitt 24 aufweisende Zylinderabschnitt 30 mit einer hier konisch gezeichneten, alternativ aber auch konvex gerundeten Dichtfläche 47, die sich zum nächsten, einen noch kleineren Durchmesser besitzenden Zylinderabschnitt 31 hin verjüngt, an einem im Inneren des Durchgangskanals 42 ausgebildeten konischen Dichtsitz 48 so anliegt, dass Brennstoff, der in den Fig. 5 und 6 durch ein Punkteraster angedeutet ist, nicht von der von rechts her einmündenden Rückführleitung 16 zur Längsbohrung 25 der Entlüftungsschraube 22 und damit auch nicht nach außen gelangen kann, wie dies in Fig. 5 dargestellt ist.

Gleichzeitig steht in dieser vollständig eingeschraubten Position der Entlüftungsschraube 22 die sich durch den ganzen links befindlichen Zylinderabschnitt 33 in axialer Richtung erstreckende Innenbohrung 37, in welche der von der Rückführleitung 16 (siehe Fig. 1 und 2) kommende Brennstoff einströmt, über die Querbohrung (siehe Fig. 4) 39 und die Nut 34 mit der Verbindungsbohrung 45 in Verbindung, über den der Brennstoff nach oben in die Bypassleitung 19 strömen kann.

In Fig. 6 ist die Entlüftungsschraube 22 in axialer Richtung nach links so weit aus dem Innengewinde 46 des Durchgangskanals 42 herausgeschraubt, dass ihr ganz rechts befindlicher Zylinderabschnitt 33 die zur Bypassleitung 19 führende Verbindungsbohrung 45 dicht verschließt.

Weiterhin ist die am Zylinderabschnitt 30 ausgebildete Dichtfläche 47 vom Dichtsitz 48 der Innenwand des Durchgangskanals 42 in axialer Richtung abgehoben. Durch eine entsprechende Anpassung der Innendurchmesser der einzelnen Abschnitte des Durchgangskanals 42 an die unterschiedlichen Durchmesser der Zylinderabschnitte 30, 31 und 32 ist ein mit der Nut 34 in Verbindung stehender Strömungsspalt geöffnet, der von der Innenbohrung 37 des ganz rechts befindlichen Zylinderabschnittes 33 über die Querbohrung 39 und die Nut 34 zwischen dem Dichtsitz 48 und Dichtfläche 47 zur Querbohrung 35 führt, die ihrerseits mit der Längsbohrung 25 des Hauptabschnittes 24 in Verbindung steht, sodass in dieser Entlüftungsstellung der Entlüftungsschraube 22 im Druck-Leitungsbereich befindliches, unter Druck stehendes Medium (Brennstoff und/oder Luft und/oder Gemisch hiervon) über die Schlauchtülle 27 und eine dort befestigbare Entlüftungsleitung 20 (siehe Fig. 1 und 2) austreten kann.

Es sei darauf hingewiesen, dass in den Fig. 3 bis 6 aus einem elastisch oder plastisch verformbaren Material bestehende Dichtelemente (Dichtmanschetten, O-Ringe usw.) nicht dargestellt sind, die der Fachmann bei Bedarf ohne weiteres an erforderlichen bzw. geeigneten Stellen bzw. Abschnitten vorsehen kann.

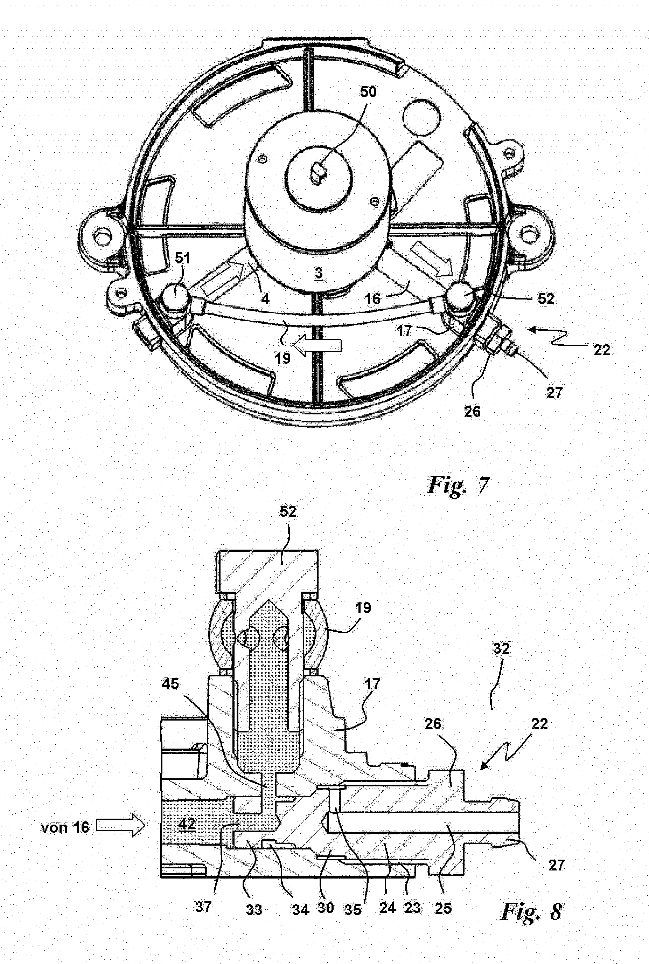

In Fig. 7 ist eine vereinfachte perspektivische Querschnittansicht durch das Gehäuse eines mit einer erfindungsgemäßen Entlüftungseinrichtung 18 ausgestatteten Heizgerätes dargestellt, in deren Mitte der Motor 3 wiedergegeben ist, auf dessen nach oben vorstehende Achse 50 das Flügelrad eines Gebläses aufgesteckt werden kann, das dazu dient, der Brennkammer des Heizgerätes Verbrennungsluft zuzuführen.

An der in Fig. 7 unteren Seite des Motors 3 befindet sich eine hier nicht sichtbare Brennstoffpumpe, deren Vorlaufleitung 4 über eine Verbindungs-Hohlschraube 51 einerseits mit der von außen kommenden Brennstoff-Zuführleitung und andererseits mit der Bypassleitung 19 in Verbindung steht, die ihrerseits über eine zweite Verbindungs-Hohlschraube 52 mit der Rückführleitung 16 verbunden ist. Im Bereich der zweiten Verbindungs-Hohlschraube 52 ist die Entlüftungsschraube 22 angeordnet, von der hier allerdings nur der 6-Kant 26 und die sich nach außen erstreckende Schlauchtülle 27 zu sehen sind.

Die Verbindungs-Hohlschraube 52 ist in die Anschlussbohrung 43 des Leitungsverbindungskörpers 17 von oben her eingeschraubt. Anders als in den Fig. 5 und 6 dargestellt, mündet die Bypassleitung 19 hier nicht direkt von oben in die Anschlussbohrung 43 sondern von der Seite her in die Verbindungs-Hohlschraube 52, wie dies auch in Fig. 8 dargestellt ist, die ansonsten im Wesentlichen der Fig. 5 entspricht, bezüglich derer sie um eine vertikale Achse gespiegelt ist. Sie zeigt ebenfalls den normalen Betriebszustand, in welchem die Entlüftungsschraube 22 vollständig in den Leitungsverbindungskörper 17 eingeschraubt ist, sodass eine durchgehende Strömungsverbindung für den aus der Rückführleitung 16 kommenden Brennstoff in die Bypassleitung 19 besteht, während aus der Schlauchtülle 27 kein Brennstoff bzw. Brennstoff/Luftgemisch austreten kann.

## Patentansprüche

1. Entlüftungseinrichtung (18) für ein mit flüssigem Brennstoff im Einstrang-Betrieb arbeitendes Heizgerät, das eine durch einen Motor (3) angetriebene Brennstoffpumpe (1) umfasst, die aus einem Vorratstank (6) Brennstoff ansaugt und in einen Druck-Leitungsbereich fördert, der mit einer in eine Brennkammer mündenden Zerstäuberdüse (10) in Verbindung steht, wobei überschüssiger Brennstoff aus dem Druck-Leitungsbereich über einen Druckregler (14), eine Rückführleitung (16) und eine Bypassleitung (19) zur Saugseite der Brennstoffpumpe (1) zurückgeführt wird, und wobei die zwischen der Rückführleitung (16) und der Bypassleitung (19) angeordnete Entlüftungseinrichtung (18) einen Leitungsverbindungskörper (17) mit einem Durchgangskanal (42) umfasst, der mit der Rückführleitung (16) in Strömungsverbindung steht und mit der Bypassleitung (19) dadurch verbindbar bzw. von dieser trennbar ist, dass ein in ihm in axialer Richtung zwischen einer Betriebsstellung und einer Entlüftungsstellung hin und her bewegbares Betätigungselement angeordnet ist, das in der Entlüftungsstellung eine Verbindung der Rückführleitung (16) mit der Außenseite des Heizgerätes ermöglicht und in der Betriebsstellung eine sichere Abdichtung des in diesen Leitungen befindlichen Mediums zur Außenseite hin gewährleistet,
**dadurch gekennzeichnet,**
**dass** eine den Durchgangskanal (42) mit der Außenseite des Heizgerätes verbindende Entlüftungsleitung (20) vorgesehen ist, und
**dass** das Betätigungselement so ausgebildet ist,
- **dass** es in der Betriebsstellung die Rückführleitung (16) mit der Bypassleitung (19) verbindet,
- **dass** es in der Entlüftungsstellung die Rückführleitung (16) mit der Entlüftungsleitung (20) verbindet und dabei die Bypassleitung (19) verschließt und
- **dass** es bei seiner Bewegung aus der Betriebsstellung in die Entlüftungsstellung zunächst die Bypassleitung (19) verschließt und erst dann die Rückführleitung (16) mit der Außenseite verbindet.

2. Entlüftungseinrichtung (18) nach Anspruch 1, **dadurch gekennzeichnet, dass** das Betätigungselement zwei Längsbohrungen (25, 37) besitzt, die sich ausgehend von seinen beiden Stirnenden (27, 38) in axialer Richtung aufeinander zu erstrecken ohne miteinander in unmittelbarer Verbindung zu stehen und von denen jede an ihrem innenliegenden, axialen Ende mit wenigstens einer Querbohrung (35, 39) in Verbindung steht, die sich radial durch das Betätigungselement erstreckt und an einer Mantelfläche des Betätigungselementes mündet, wobei die Anordnung so getroffen ist, dass in der Entlüftungsstellung eine Längsbohrung (25) mit einer nach außen führenden Entlüftungsleitung (20) verbunden ist, während die andere Längsbohrung (37) dann, wenn sich das Betätigungselement in der Betriebsstellung befindet, mit der Rückführleitung (16) in Strömungsverbindung steht.

3. Entlüftungseinrichtung (18) nach Anspruch 1 oder 2, **dadurch gekennzeichnet, dass** das Betätigungselement eine Entlüftungsschraube (22) ist, die in ein Innengewinde des Durchgangskanals (42) eingeschraubt und durch Drehen um ihre Längsachse zwischen der Betriebsstellung und der Entlüftungsstellung in axialer Richtung verschiebbar ist.

4. Mit flüssigem Brennstoff im Einstrang-Betrieb arbeitendes Heizgerät, **dadurch gekennzeichnet, dass** es mit einer Entlüftungseinrichtung (18) nach einem der Ansprüche 1 bis 3 ausgestattet ist.

## Claims

1. A venting apparatus (18) for a heating device operating with liquid fuel in a single-line mode, which heating device includes a fuel pump (1) which is driven by a motor (3) for drawing fuel from a supply tank (6) and delivering it into a pressure line region which is in communication with an atomizer nozzle (10) opening into a combustion chamber, wherein excess fuel is returned from the pressure line region by way of a pressure limiter (14), a return line (16) and a bypass line (19) to the suction side of the fuel pump (1), and wherein the venting apparatus (18) which is arranged between the return line (16) and the bypass line (19) comprises a line connecting body (17) with a through passage (42) which is in flow communication with said return line (16) and can be connected to or separated from said bypass line (19) by the fact that in said through passage an actuating element is arranged which is reciprocable in axial direction between an operating position and a venting position, said actuating element, in the venting position, allowing for a connection of the return line (16) with the exterior of the heating device and, in the operating position ensuring a reliable sealing of the medium disposed in said lines towards the exterior,
**characterised in that** a venting line (20) is provided which connects said through passage(42) with the exterior of the heating device, and
**in that** said actuating element is so adapted
- that, in the operating position, it connects the return line (16) to the bypass line (19),
- that, in the venting position, it connects the return line (16) to the venting line (20) and **in that** case closes the bypass line (19), and
- that in its movement from the operating position into the venting position it firstly closes the bypass line (19) and only then connects the return line (16) to the exterior.

2. A venting apparatus (18) according to claim 1, **characterised in that** the actuating element has two longitudinal bores (25, 37) which starting from its two ends (27, 38) extend in the axial direction towards each other without being in direct communication with each other and each of which at its inwardly disposed axial end is in communication with at least one transverse bore (35, 39) which extends radially through the actuating element and opens at a peripheral surface of the actuating element, wherein the arrangement is such that in the venting position one (25) of the longitudinal bores is connected to an outwardly leading venting line (20) while, when the actuating element is in the operating position, the other longitudinal bore (37) is in flow communication with the return line (16).

3. A venting apparatus (18) according to claim 1 or claim 2, **characterised in that** the actuating element is a venting screw (22) which is screwed into an internal female thread in the through passage (42) and is displaceable by rotation about is longitudinal axis in the axial direction between the operating position and the venting position.

4. A heating device operating with liquid fuel in the single-line mode **characterised in that** it is equipped with a venting apparatus (18) according to one of claims 1 to 3.

## Revendications

1. Dispositif de ventilation (18) pour un appareil de chauffage fonctionnant avec du combustible liquide en mode monotube, lequel appareil comprend une pompe à combustible (1) entraînée par un moteur (3), qui aspire du combustible d'un réservoir de stockage (6) et le refoule dans une zone de conduite de refoulement, qui est reliée à une buse de vaporisateur (10) débouchant dans une chambre de combustion, dans lequel l'excédent de combustible est ramené de la zone de conduite de refoulement au côté d'aspiration de la pompe à combustible (1) en passant par un régulateur de pression (14), une conduite de retour (16) et une conduite de dérivation (19), et dans lequel le dispositif de ventilation (18) disposé entre la conduite de retour (16) et la conduite de dérivation (19) comprend un corps de liaison de conduite (17) avec un canal de passage (42), qui est en liaison fluidique avec la conduite de retour (16) et peut être relié à la conduite de dérivation (19) ou peut en être séparé, du fait qu'un élément d'actionnement mobile en va-et-vient dans la direction axiale entre une position de fonctionnement et une position de ventilation est disposé dans celui-ci, lequel, dans la position de ventilation, permet une liaison de la conduite de retour (16) au côté extérieur de l'appareil de chauffage et, dans la position de fonctionnement, garantit une étanchéité sûre du milieu situé dans ces conduites en direction du côté extérieur,
**caractérisé**
**en ce qu'**une conduite de ventilation (20) reliant le canal de passage (42) au côté extérieur de l'appareil de chauffage est prévue, et
**en ce que** l'élément d'actionnement est conçu de sorte
- que, dans la position de fonctionnement, il relie la conduite de retour (16) à la conduite de dérivation (19),
- que, dans la position de ventilation, il relie la conduite de retour (16) à la conduite de ventilation (20) et, ce faisant, ferme la conduite de dérivation (19) et
- que, lors de son déplacement de la position de fonctionnement dans la position de ventilation, il ferme tout d'abord la conduite de dérivation (19) puis relie la conduite de retour (16) au côté extérieur.

2. Dispositif de ventilation (18) selon la revendication 1, **caractérisé en ce que** l'élément d'actionnement possède deux trous longitudinaux (25, 37), qui s'étendent l'un vers l'autre à partir de leurs deux extrémités avant (27, 38) dans la direction axiale sans être directement reliés l'un à l'autre et dont chacun est relié par son extrémité axiale intérieure à au moins un trou transversal (35, 39), qui s'étend radialement à travers l'élément d'actionnement et débouche au niveau d'une surface extérieure de l'élément d'actionnement, dans lequel la disposition est telle que, dans la position de ventilation, un trou longitudinal (25) est relié à une conduite de ventilation (20) menant vers l'extérieur, tandis que l'autre trou longitudinal (37) est en liaison fluidique avec la conduite de retour (16) lorsque l'élément d'actionnement se trouve dans la position de fonctionnement.

3. Dispositif de ventilation (18) selon la revendication 1 ou 2, **caractérisé en ce que** l'élément d'actionnement est une vis de ventilation (22), qui est vissée dans un filet intérieur du canal de passage (42) et peut se déplacer dans la direction axiale entre la position de fonctionnement et la position de ventilation par rotation autour de son axe longitudinal.

4. Appareil de chauffage fonctionnant avec du combustible liquide en mode monotube, **caractérisé en ce qu'**il est équipé d'un dispositif de ventilation (18) selon l'une quelconque des revendications 1 à 3.
